# EUROPEAN PATENT APPLICATION

(11) **EP 1 690 907 A2**
(43) Date of publication of application: **16.08.2006**
(21) Application number: 06002667.1
(22) Date of filing: 09.02.2006
(51) Int. Cl.: C09J 133/06, C09J 7/02

(54) **Pressure-sensitive adhesive tape and pressure-sensitive adhesive composition**

(30) Priority: 14.02.2005 JP 2005036415; 24.11.2005 JP 2005338200
(71) Applicant: NITTO DENKO CORPORATION, Osaka (JP)
(72) Inventor: Okochi, Naoki c/oNitto Denko Corporation, Osaka (JP); Shirai, Masato c/o Nitto Denko Corporation, Osaka (JP); Nishijima, Kenichi c/o Nitto Denko Corporation, Osaka (JP)
(74) Representative: Grünecker, Kinkeldey, Stockmair & Schwanhäusser Anwaltssozietät

(57) **Abstract**

A pressure-sensitive adhesive tape is characterized by containing at least (A) an acrylic polymer, (B) a petroleum resin, and (C) a rosin-based resin, wherein the component (B) and the component (C) are contained in proportions of from 1 to 50 parts by weight and from 1 to 50 parts by weight, respectively based on 100 parts by weight of the component (A). In addition, it is preferable that the total sum of the component (B) and the component (C) is not more than 60 parts by weight based on 100 parts by weight of the component (A). As the rosin-based resin (C), a rosin ester-based resin is preferable.

## Description

### FIELD OF THE INVENTION

The present invention relates to a pressure-sensitive adhesive tape and a pressure-sensitive adhesive composition for forming a pressure-sensitive adhesive layer in the subject pressure-sensitive adhesive tape. In more detail, the invention relates to a pressure-sensitive adhesive tape having excellent edge part peeling-preventing properties and capable of revealing an appropriate unwinding force and a pressure-sensitive adhesive composition for forming a pressure-sensitive adhesive layer in the subject pressure-sensitive adhesive tape.

### BACKGROUND OF THE INVENTION

Hitherto, as pressure-sensitive adhesive tapes (pressure-sensitive adhesive tapes for bundling) which are used in bundling various electric wires and wirings such as cables, pressure-sensitive adhesive tapes made of, as a substrate, a vinyl chloride-based resin (sometimes referred to as "PVC") have been widely used from the viewpoints of workability, flame resistance and so on. However, pressure-sensitive adhesive tapes using PVC produce noxious fumes in destruction by fire. Thus, in recent years, pressure-sensitive adhesive tapes made of, as a substrate, a plastic free from a halogen atom such as chlorine (sometimes referred to as "non-halogen pressure-sensitive adhesive tapes"), especially pressure-sensitive adhesive tapes made of, as a substrate, a polyolefin-based resin composition made of a polyolefin-based resin as the principal material have been started to be used.

However, as in the case of PVC, it was very difficult to impart strength and flexibility suited for bundling use and further a balance with stress relaxation properties to the polyolefin-based resin compositions. For that reason, in order that a polyolefin-based resin composition can be preferably used as a substrate in pressure-sensitive adhesive tapes for bundling use, for example, there have been made various investigations regarding the balance between strength and flexibility of the polyolefin-based resin compositions and so on (see JP-A-2001-192629 and JP-A-2001-311061 (the term "JP-A" as used herein means an "unexamined published Japanese patent application")).

On the other hand, there have been proposed non-halogen pressure-sensitive adhesive tapes in which tackiness and stickiness are secured (see JP-A-2001-131509 and JP-A-2001-164215).

However, the problem regarding the stress relaxation properties has not been satisfactorily solved yet. For that reason, pressure-sensitive adhesive tapes made of, as a substrate, a polyolefin-based resin composition still involve a problem in reliability such that an edge part is peeled off after bundling or a problem in workability such that an unwinding force of the pressure-sensitive adhesive tape is excessively heavy so that the pressure-sensitive adhesive is taken by its own back surface or inversely, an unwinding force of the pressure-sensitive adhesive tape is excessively light so that tight bundling cannot be achieved.

Furthermore, it cannot be said that the foregoing non-halogen pressure-sensitive adhesive tapes in which tackiness and stickiness are secured are satisfactory in view of edge part peeling-preventing properties for preventing peeling of an edge part after bundling and workability (unwinding properties).

### SUMMARY OF THE INVENTION

Accordingly, an object of the invention is to provide a pressure-sensitive adhesive tape having excellent edge part peeling-preventing properties and capable of revealing an appropriate unwinding force and a pressure-sensitive adhesive composition for forming a pressure-sensitive adhesive layer in the subject pressure-sensitive adhesive tape.

Another object of the invention is to provide a pressure-sensitive adhesive tap for preventing the production of noxious fumes at the time of destruction by fire and a pressure-sensitive adhesive composition for forming a pressure-sensitive adhesive layer in the subject pressure-sensitive adhesive tape.

A still another object of the invention is to provide a pressure-sensitive adhesive tape which is useful as a pressure-sensitive adhesive tape for bundling and a pressure-sensitive adhesive composition for forming a pressure-sensitive adhesive layer in the subject pressure-sensitive adhesive tape.

In order to solve the foregoing objects, the present inventors made extensive and intensive investigations. As a result, it has been found that in a pressure-sensitive adhesive composition for constituting a pressure-sensitive adhesive layer, by using a tackifier comprising a specific combination, it is possible to obtain a pressure-sensitive adhesive tape having excellent edge part peeling-preventing properties and capable of revealing an appropriate unwinding force, leading to accomplishment of the invention.

Specifically, the invention is to provide a pressure-sensitive adhesive composition comprising at least (A) an acrylic polymer, (B) a petroleum resin, and (C) a rosin-based resin, wherein the component (B) and the component (C) are contained in proportions of from 1 to 50 parts by weight and from 1 to 50 parts by weight, respectively based on 100 parts by weight of the component (A).

In the pressure-sensitive adhesive composition of the invention, it is further preferable that the total sum of the component (B) and the component (C) is not more than 60 parts by weight based on 100 parts by weight of the component (A).

A rosin ester-based resin is preferable as the rosin-based resin (C), and a softening point of the rosin-based resin (C) is preferably from 80 to 180°C.

Also, the invention is to provide a pressure-sensitive adhesive tape comprising a substrate having on at least one surface thereof a pressure-sensitive adhesive layer, wherein the pressure-sensitive adhesive layer is formed of the foregoing pressure-sensitive adhesive composition. The substrate may contain a polyolefin-based resin and may not substantially contain a halogen atom. The pressure-sensitive adhesive tape of the invention can be preferably used as a pressure-sensitive adhesive tape for bundling.

### DETAILED DESCRIPTION OF THE INVENTION

The pressure-sensitive adhesive composition of the invention contains at least at least (A) an acrylic polymer, (B) a petroleum resin, and (C) a rosin-based resin and has a composition such that not only a proportion of the petroleum resin (B) is from 1 to 50 parts by weight based on 100 parts by weight of the acrylic polymer (A), but also a proportion of the rosin-based resin is from 1 to 50 parts by weight based on 100 parts by weight of the acrylic polymer (A). In this way, since the petroleum resin (B) and the rosin-based resin (C) are used in appropriate proportions to the acrylic polymer (A) as a base polymer of the pressure-sensitive adhesive, not only excellent edge part peeling-preventing properties can be exhibited, but also an appropriate unwinding force can be revealed. Specifically, by containing the rosin-based resin (C) in an appropriate proportion, it is possible to improve edge part peeling-preventing properties for preventing peeling of an edge part in using a pressure-sensitive adhesive tape (for example, in bundling) (such edge part peeling-preventing properties are an important characteristic as a pressure-sensitive adhesive tape for bundling in view of practical use) .

Furthermore, on the other hand, when laying emphasis on an improvement in edge part peeling-preventing properties, an unwinding force in unwinding a pressure-sensitive adhesive tape (pressure-sensitive adhesive tape wound body) becomes small. On this occasion, by adding a plasticizer, it is possible make the unwinding force of the pressure-sensitive adhesive tape large. However, since the plasticizer serves disadvantageously on the edge part peeling-preventing properties, it was difficult to make both unwinding properties in unwinding the pressure-sensitive adhesive tape and edge part peeling-preventing properties compatible with each other in excellent levels. However, in the invention, since the petroleum resin (B) is used in an appropriate proportion, the unwinding properties in unwinding the pressure-sensitive adhesive tape are improved with the edge part peeling-preventing properties being not substantially lowered or not lowered at all, thereby revealing an appropriate unwinding force.

### [Acrylic polymer (A)]

As the acrylic polymer (A), (meth)acrylic ester-based polymers made of, as a monomer principal component, a (meth)acrylic ester (acrylic ester or methacrylic ester) can be used. Examples of such a (meth)acrylic ester include cycloalkyl (meth)acrylates such as cyclohexyl (meth)acrylate and aryl (meth)acrylates such as phenyl (meth)acrylates in addition to alkyl (meth)acrylates as described below.

In particular, as the acrylic polymer (A), alkyl (meth)acrylate-based polymers made of, as a monomer principal component, an alkyl (meth)acrylate can be preferably used. The alkyl (meth)acrylate-based polymer may be a polymer (homopolymer) which is made of only one kind of an alkyl (meth)acrylate or a copolymer of an alkyl (meth)acrylate and other (meth)acrylic ester (for example, cycloalkyl (meth)acrylates and aryl (meth)acrylates) or a monomer (copolymerizable monomer) which can be copolymerized with the alkyl (meth)acrylate. That is, in the alkyl (meth)acrylate-based polymer, the monomer component such as alkyl (meth)acrylates may be used singly or in combination of two or more kinds thereof.

Examples of the alkyl (meth)acrylate in the acrylic polymer (A) include C₁₋₂₀ alkyl (meth)acrylates such as methyl (meth)acrylate, ethyl (meth)acrylate, propyl (meth)-acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)-acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)-acrylate, pentadecyl (meth)acrylate, hexadecyl (meth)-acrylate, heptadecyl (meth)acrylate, octadecyl (meth)-acrylate, nonadecyl (meth)acrylate, and eicosyl (meth)-acrylate. Of these, C₁₋₁₄ alkyl (meth)acrylates are preferable. As the alkyl (meth)acrylate, methyl (meth)-acrylate, ethyl (meth)acrylate, butyl (meth)acrylate, 2-ethylhexyl (meth)acrylate, and octyl (meth)acrylate are especially preferable.

The (meth)acrylic ester is used as the monomer principal component, and it is important that a proportion of the (meth) acrylic ester (especially, alkyl (meth)acrylate) is 50 % by weight or more based on the total amount of the monomer components. The proportion of the (meth)acrylic ester is preferably 80 % by weight or more, and more preferably 90 % by weight or more. When the proportion of the (meth)acrylic ester is less than 50 % by weight based on the total amount of the monomer components, adhesiveness or cohesiveness (or adhesive strength or cohesive strength) of the pressure-sensitive adhesive composition is lowered.

In the acrylic polymer (A), examples of the copolymerizable monomer which can be copolymerized with the alkyl (meth)acrylate include carboxyl group-containing monomers such as (meth)acrylic acid (acrylic acid or methacrylic acid), itaconic acid, maleic acid, fumaric acid, and crotonic acid; acid anhydride group-containing monomers such as maleic anhydride and itaconic anhydride; cyano acrylate-based monomers such as acrylonitrile and methacrylonitrile; aminoalkyl (meth)acrylate-based monomers such as aminoethyl (meth)acrylate, N,N-dimethylaminoethyl (meth)acrylate, and t-butylaminoethyl (meth)acrylate; (N-substituted) amide-based monomers such as (meth)acrylamide, N,N-dimethyl (meth)acrylamide, N-butyl (meth)acrylamide, N-hydroxy (meth)acrylamide, N-methylol (meth)acrylamide, and N,N-dimethylaminopropyl (meth)acrylamide; vinyl ester-based monomers such as vinyl acetate and vinyl propionate; styrene-based monomers such as styrene, α-methylstyrene, and vinyltoluene; hydroxyl group-containing monomers such as 2-hydroxyethyl (meth)acrylate, 3-hydroxypropyl (meth)-acrylate, and 4-hydroxybutyl (meth)acrylate; epoxy group-containing acrylic monomers such as glycidyl (meth)-acrylate; alkoxyalkyl (meth)acrylate-based monomers such as methoxyethyl (meth)acrylate and ethoxyethyl (meth)acrylate; lactone acrylate-based monomers such as ε-caprolactone acrylate; olefin-based monomers such as ethylene, propylene, isoprene, and butadiene; vinyl ether-based monomers such as methyl vinyl ether and ethyl vinyl ether; morpholine (meth)acrylate; and heterocyclic ring-containing vinyl-based monomers such as N-vinyl-2-pyrrolidone, N-vinylpyridine, N-vinylpiperidone, N-vinylpyrimidine, N-vinylpiperazine, N-vinylpyrazine, N-vinylpyrrole, N-vinylimidazole, and N-vinyloxazole.

In the acrylic polymer (A), polyfunctional monomers such as hexanediol di(meth)acrylate, (poly)ethylene glycol di (meth) acrylate, (poly) propylene glycol di (meth) acrylate, neopentyl glycol di(meth)acrylate, pentaerythritol di(meth)acrylate, trimethylolpropane tri(meth)acrylate, pentaerythritol tri(meth)acrylate, dipentaerythritol hexa-(meth)acrylate, epoxy acrylate, polyester acrylate, urethane acrylate, divinylbenzene, butyl di(meth)acrylate, and hexyl di(meth)acrylate can also be used as the copolymerizable monomer.

It is important that such a copolymerizable monomer is used in a proportion of not more than 50 % by weight based on the total amount of the monomer components. Specifically, in the case where the copolymerizable monomer is a carboxyl group-containing monomer (ethylenically unsaturated carboxylic acid) such as (meth)acrylic acid, it is preferred to use the carboxyl group-containing monomer in an amount within the range of 10 % by weight based on the total amount of the monomer components from the viewpoint of polymerization stability. Furthermore, in order to reveal satisfactory pressure-sensitive adhesiveness, it is desired to determine the composition of the monomer principal component or copolymerizable monomer such that a glass transition temperature of the resulting acrylic polymer (A) is not higher than 250 K.

The acrylic polymer (A) can be prepared by a known and/or customary polymerization method (for example, an emulsion polymerization method, a solution polymerization method, and a block polymerization method).

In the invention, the pressure-sensitive adhesive composition may be a pressure-sensitive adhesive composition of a solution type (that is, a pressure-sensitive adhesive composition using an organic solvent as a solvent). However, taking into account a load to the environment, a pressure-sensitive adhesive composition of an emulsion type (water dispersion type) (that is, a pressure-sensitive adhesive composition using water as a solvent) is preferable. Accordingly, while the acrylic polymer (A) may be an acrylic polymer prepared by a solution polymerization method, an acrylic polymer prepared by an emulsion polymerization method can be preferably used. As a matter of course, as the need arises, the acrylic polymer (A) prepared by other polymerization method (for example, a solution polymerization method) than the emulsion polymerization method may be emulsified with an emulsifier to prepare a pressure-sensitive adhesive composition of an emulsion type.

Incidentally, a polymerization initiator, a chain transfer agent, an emulsifier, and the like which are used in the polymerization of the acrylic polymer (A) are not particularly limited, and known and/or customary substances can be properly selected and used. More specifically, examples of the polymerization initiator include azo-based polymerization initiators such as 2,2'-azobisisobutyronitrile, 2,2'-azobis(4-methoxy-2,4-di-methylvaleronitrile), 2,2'-azobis(2,4-dimethylvalero-nitrile), 2,2'-azobis(2-methylbutyronitrile), 1,1'-azobis(cyclohexane-1-carbonitrile), 2,2'-azobis(2,4,4-trimethylpentane), dimethyl-2,2'-azobis(2-methylpropionate), 2,2'-azobis[2-methyl-N-(phenylmethyl)-propioneamidine]di-hydrochloride, 2,2'-azobis[2-(3,4,5,6-tetrahydropyrimidin-2-yl)propane]-dihydrochloride, and 2,2'-azobis[2-(2-imidazolin-2-yl)-propane]; peroxide-based polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclo-hexane, 1,1-bis(t-butylperoxy)cyclododecane, 3,3,5-trimethylcyclohexanoyl peroxide, and t-butyl peroxypivalate; and redox-based polymerization initiators constituted of a persulfate and sodium hydrogensulfite. The polymerization initiator can be used singly or in combination of two or more kinds thereof. An amount of the polymerization initiator to be used is not particularly limited and can be properly selected depending upon the polymerization method and polymerization reactivity, the kind and proportion of the monomer components, the kind of the polymerization initiator, and the like.

Furthermore, examples of the chain transfer agent include lauryl mercaptane, glycidyl mercaptane, mercapto-acetic acid, 2-mercaptoethanol, thioglycolic acid, 2-ethylhexyl thioglycolate, and 2,3-dimethylcapto-1-propanol. Moreover, the emulsifier can be properly selected and used among known emulsifiers such as anionic emulsifiers, nonionic emulsifiers, and radical polymerizable emulsifiers. Specifically, examples of the nonionic emulsifier include nonionic surfactants such as polyoxyethylene alkyl ethers, polyoxyalkylene alkyl ethers, polyoxyethylene derivatives, polyoxyethylene alkylamines, polyoxyethylene fatty acid esters, glycerin fatty acid esters, and sorbitan fatty acid esters. Furthermore, examples of the anionic emulsifier include anionic surfactants such as fatty acid salts, alkyl phosphoric acid salts, alkyl sulfates, alkylbenzenesulfonic acid salts, alkylnaphthalenesulfonic acid salts, and alkyl diphenyl ether disulfonic acid salts. Such an emulsifier can be used singly or in admixture of two or more kinds thereof.

Incidentally, in the polymerization, the monomer components may be introduced into the reaction system by collectively charging in advance or may be introduced by continuously or intermittently dripping. Alternatively, the monomer components may be introduced by collectively charging a part thereof and then continuously or intermittently dripping the reminder. Furthermore, the polymerization reaction may be carried out stepwise. Specifically, for example, after carrying out the polymerization once, the polymerization may be further carried out upon addition of the monomer components.

In the invention, as the polymerization method of the acrylic polymer (A), there can be preferably employed a polymerization method resulting from combining a collective polymerization method for carrying out emulsion polymerization by collectively charging the monomer components using a polymerization initiator having a half-time temperature of 10 hours of not higher than 70°C (preferably not higher than 65°C) with a drip polymerization method for carrying out polymerization while dripping the monomer components as described in JP-A-2002-60713. Specifically, as the polymerization method of the acrylic polymer (A), there can be preferably employed a method in which after collectively charging a part of the monomer components (for example, from 20 to .80 % by weight of the monomer components among the whole of the monomer components) and polymerizing them using a polymerization initiator having a half-time temperature of 10 hours of not higher than 70°C (for example, after polymerizing to an extent that the polymerization rate is 95 % by weight or more), a polymerization initiator is added in the reaction product after this polymerization and polymerization is carried out while further dripping the remaining monomer components (for example, while dripping the remaining monomer components in an emulsion state); and a method in which a polymerization reaction product obtained by collectively charging a part of the monomer components (for example, from 20 to 80 % by weight of the monomer components among the whole of the monomer components) and polymerizing them using a polymerization initiator having a half-time temperature of 10 hours of not higher than 70°C and a polymerization reaction product obtained by carrying out polymerization in the presence of a polymerization initiator while dripping the remaining monomer components (for example, while dripping the remaining monomer components in an emulsion state) are mixed.

### [Petroleum resin (B)]

The petroleum resin (B) is not particularly limited. For example, petroleum resins (hydrocarbon resins) which can be utilized as a tackifying resin can be used. For example, the petroleum resin (B) can be properly selected and used among known petroleum resins such as aromatic petroleum resins, aliphatic petroleum resins, alicyclic petroleum resins (aliphatic cyclic petroleum resins), aliphatic/aromatic petroleum resins, aliphatic/alicyclic petroleum resins, hydrogenated petroleum resins, coumarone-based resins, and coumarone-indene-based resins. The petroleum resin (B) can be used singly or in combination of two or more kinds thereof.

Specifically, in the petroleum resin (B), examples of the aromatic petroleum resin include polymers using only one kind or two or more kinds of vinyl group-containing aromatic hydrocarbons having from 8 to 10 carbon atoms (for example, styrene, o-vinyltoluene, m-vinyltoluene, p-vinyltoluene, α-methylstyrene, β-methylstyrene, indene, and methylindene). As the aromatic petroleum resin, aromatic petroleum resins obtained from a fraction such as vinyltoluene and indene (so-called "C9 petroleum fraction") (that is, so-called "C9-based petroleum resins") can be preferably used.

Furthermore, examples of the aliphatic petroleum resin include polymers using only one kind or two or more kinds of olefins or dienes having from 4 to 5 carbon atoms (for example, olefins such as butene-1, isobutylene, and pentene-1; and dienes such as butadiene, piperylene (1,3-pentadiene), and isoprene). As the aliphatic petroleum resin, aliphatic petroleum resins obtained from a fraction such as butadiene, piperylene, and isoprene (so-called "C4 petroleum fraction" or "C5 petroleum fraction") (that is, so-called "C4-based petroleum resins" or "C5-based petroleum resins", etc.) can be preferably used.

Examples of the alicyclic petroleum resin include alicyclic hydrocarbon-based resins resulting from cyclization and dimerization of an aliphatic petroleum resin (so-called "C4-based petroleum resin" or "C5-based petroleum resin", etc.) and subsequent polymerization; polymers of a cyclic diene compound (for example, cyclopentadiene, dicyclopentadiene, ethylidene norbornene, dipentene, ethylidene bicycloheptene, vinylcycloheptene, tetrahydroindene, vinylcyclohexene, and limonene) or hydrogenated products thereof; and alicyclic hydrocarbon-based resins resulting from hydrogenation of an aromatic ring of the foregoing aromatic hydrocarbon resins or aliphatic/aromatic petroleum resins as described below.

Examples of the aliphatic/aromatic petroleum resin include styrene-olefin-based copolymers. As the aliphatic/aromatic petroleum resin, so-called "C5/C9 copolymer-based petroleum resins" and the like can be used.

As the petroleum resin (B), aliphatic petroleum resins can be preferably used, and C5-based petroleum resins are especially preferable. As such petroleum resin (B), commercially available products such as a trade name "AP-1085" (manufactured by Arakawa Chemical Industries, Ltd.) can be used.

While the softening point (softening temperature) of the petroleum resin (B) is not particularly limited, for example, it is preferably from 70 to 170°C, and especially preferably from 75 to 120°C. As the softening point of the petroleum resin (B), for example, values measured according to JIS K5601-2-2 (the ring and ball method) can be employed.

Incidentally, in general, petroleum resins are low in compatibility with acrylic polymers and are largely influenced by the time elapsed or preservation temperature. For that reason, even though petroleum resins are enumerated as a tackifying resin (tackifier) which can be utilized for acrylic polymers, they are not substantially used for acrylic polymers in view of safety, and it is very rare that petroleum resins are preferably used for acrylic polymers. However, the invention dares to use a petroleum resin which is low in compatibility with acrylic polymers in combination with an acrylic polymer, and this issue is the point of the invention. That is, by daring to add a petroleum resin which is low in compatibility with acrylic polymers and is not substantially used to a pressure-sensitive adhesive composition made of an acrylic polymer as a base polymer, it is possible to exhibit an effect for improving an unwinding force of a pressure-sensitive adhesive tape having a pressure-sensitive adhesive layer made of the foregoing pressure-sensitive adhesive composition. This effect is an effect which has not been found out so far. Moreover, by applying the foregoing pressure-sensitive adhesive composition to a pressure-sensitive adhesive tape for bundling in which unwinding workability is considered to be important, it is possible to achieve unwinding with an appropriate unwinding force and to largely improve the unwinding workability.

When the proportion of the petroleum resin (B) is too low, an effect for improving unwinding properties of a pressure-sensitive adhesive tape becomes small. On the other hand, when it is too high, because of low compatibility with an acrylic polymer as a base polymer, the stability of the pressure-sensitive adhesive composition or pressure-sensitive adhesive layer is lowered. Thus, for example, there is some possibility that an adhesive strength of the pressure-sensitive adhesive tape is largely changed with a lapse of time or that adhesive taking occurs at the time of unwinding the pressure-sensitive adhesive tape. For that reason, with respect to the proportion of the petroleum resin (B), a proportion of the petroleum resin (B) at which an effect for revealing an appropriate unwinding force at a maximum can be brought is from 1 to 50 parts by weight, and preferably from 5 to 40 parts by weight based on 100 parts by weight of the acrylic polymer (A).

### [Rosin-based resin (C)]

The rosin-based resin (C) is not particularly limited. For example, rosin-based resins which can be utilized as a tackifying resin can be used. For example, the rosin-based resin can be properly selected and used among known rosin-based resins including unmodified rosins (crude rosins) such as gum rosin, wood rosin, and tall oil rosin and modified rosins resulting from modification of such an unmodified rosin by polymerization, disproportionation, hydrogenation, etc. (for example, polymerized rosins, stabilized rosins, disproportionated rosins, completely hydrogenated rosins, partially hydrogenated rosins, and other chemically modified rosins), and besides, various rosin derivatives. Examples of the rosin derivative include rosin ester-based resins such as ester compounds of a rosin resulting from esterification of an unmodified rosin with an alcohol (unmodified rosin esters) and ester compounds of a modified rosin resulting from esterification of a modified rosin (for example, polymerized rosins, stabilized rosins, disproportionated rosins, completely hydrogenated rosins, and partially hydrogenated rosins) with an alcohol (for example, polymerized rosin esters, stabilized rosin esters, disproportionated rosin esters, completely hydrogenated rosin esters, and partially hydrogenated rosin esters); unsaturated fatty acid modified rosin-based resins resulting from modification of an unmodified rosin or a modified rosin (for example, polymerized rosins, stabilized rosins, disproportionated rosins, completely hydrogenated rosins, and partially hydrogenated rosins) with an unsaturated fatty acid; unsaturated fatty acid modified rosin ester-based resins resulting from modification of a rosin ester-based resin with an unsaturated fatty acid; rosin alcohol-based resins resulting from a reduction treatment of a carboxyl group in unmodified rosins, modified rosins (for example, polymerized rosins, stabilized rosins, disproportionated rosins, completely hydrogenated rosins, and partially hydrogenated rosins), unsaturated fatty acid modified rosin-based resins, and unsaturated fatty acid modified rosin ester-based resins; and metal salts of rosin-based resins such as unmodified rosins, modified rosins, and various rosin derivatives (in particular, rosin ester-based resins). The rosin-based resin (C) can be used singly or in combination of two or more kinds thereof.

Incidentally, as the alcohol which is used in preparing the rosin ester-based resin, polyhydric alcohols including dihydric alcohols such as ethylene glycol, diethylene glycol, propylene glycol, neopentyl glycol, trimethylene glycol, tetramethylene glycol, 1,3-butanediol, and 1,6-hexanediol; trihydric alcohols such as glycerin, trimethylolethane, trimethylolpropane, and triethylolethane; tetrahydric alcohols such as pentaerythritol and diglycerin; and hexahydric alcohols such as dipentaerythritol can be preferably used. However, monohydric alcohols such as methanol and ethanol may also be used. Furthermore, as the alcohol, amino alcohols such as triethanolamine, tripropanolamine, triisopropylamine, N-isobutyldiethanolamine, and N-n-butyldiethanolamine can also be used.

Furthermore, examples of the unsaturated fatty acid which is used in preparing the unsaturated fatty acid modified rosin-based resin or unsaturated fatty acid modified rosin ester-based resin include α,β-unsaturated carboxylic acids such as fumaric acid, maleic acid or an anhydride thereof, itaconic acid, citraconic acid or an anhydride thereof, acrylic acid, and methacrylic acid.

In the invention, as the rosin-based resin (C), rosin ester-based resins can be preferably used, and polymerized rosin esters and stabilized rosin esters are especially preferable. As such rosin-based resin (C), commercially available products such as a trade name "E-865" (manufactured by Arakawa Chemical Industries, Ltd.) can be used.

While the softening point (softening temperature) of the rosin-based resin (C) is not particularly limited, for example, it is preferably from 80 to 180°C, and especially preferably from 120 to 170°C. As the softening point of the rosin-based resin (C), for example, values measured according to JIS K5601-2-2 (the ring and ball method) can be employed.

A proportion of the rosin-based resin (C) is from 1 to 50 parts by weight, and preferably from 5 to 40 parts by weight based on 100 parts by weight of the acrylic polymer (A). When the proportion of the rosin-based resin (C) is less than 1 part by weight based on 100 parts by weight of the acrylic polymer (A), it becomes impossible to satisfactorily reveal the edge part peeling-preventing properties for preventing peeling off from an edge part in bundling by the pressure-sensitive adhesive tape. On the other hand, when it exceeds 50 parts by weight, the pressure-sensitive adhesive composition becomes too hard so that an appropriate tacky feeling disappears and that the unwinding force becomes too small.

Furthermore, the total sum (total amount) of the petroleum resin (B) and the rosin-based resin (C) is preferably not more than 60 parts by weight (for example, from 10 to 60 parts by weight), and especially preferably from 10 to 50 parts by weight based on 100 parts by weight of the acrylic polymer (A). Incidentally, when the total sum of the petroleum resin (B) and the rosin-based resin (C) exceeds 60 parts by weight based on 100 parts by weight of the acrylic polymer (A), influences of the tackifying resin which accounts for in the pressure-sensitive adhesive composition become large so that the tack is liable to become small. Furthermore, in the case where a tackifying resin having remarkably low compatibility is used, there is some possibility that this tackifying resin having remarkably low compatibility is segregated on the surface of the pressure-sensitive adhesive, whereby the use of a pressure-sensitive adhesive tape may possibly be hindered.

Specific amounts of the petroleum resin (B) and the rosin-based resin (C) to be used must fall within the foregoing proportions, respectively (from 1 to 50 parts by weight based on 100 parts by weight of the acrylic polymer (A)). For example, in the case where the pressure-sensitive adhesive tape is a substrate-provided pressure-sensitive adhesive tape, the amounts of use can be properly selected depending upon the thickness and hardness of a substrate to be used (for example, plastic substrates), the composition of the pressure-sensitive adhesive composition, and so on. For example, in the case where the pressure-sensitive adhesive tape is a substrate-provided pressure-sensitive adhesive tape and a plastic substrate is used as the substrate, when a substrate having a thick thickness or a hard substrate is used as the substrate, the edge part peeling-preventing properties are liable to be lowered. Accordingly, it is preferable that a blending amount of the rosin-based resin (C) is high within the foregoing proportion range. Thus, it is possible to obtain a pressure-sensitive adhesive tape having satisfactory edge part peeling-preventing properties. Furthermore, when a substrate having a thin thickness or a substrate which is relatively soft and advantageously works on the edge part peeling-preventing properties is used as the substrate, it is possible to suppress the total amount of the petroleum resin (B) and the rosin-based resin (C). In addition, in the case where the unwinding force of the pressure-sensitive adhesive tape is small, it is possible to deal with this by making a blending amount of the petroleum resin (B) high within the foregoing proportion range. Thus, it is possible to obtain a pressure-sensitive adhesive tape capable of revealing an appropriate unwinding force.

Incidentally, in the invention, a plasticizer can be used. That is, the plasticizer can be arbitrarily used. By adding a plasticizer in the pressure-sensitive adhesive composition, in preparing a pressure-sensitive adhesive tape having a pressure-sensitive adhesive layer made of the subject pressure-sensitive adhesive composition; the plasticizer in the pressure-sensitive adhesive layer moves to a substrate, whereby an effect for softening the substrate is revealed. By making the substrate soft in this way, it is possible to improve the edge part peeling-preventing properties of the pressure-sensitive adhesive tape. From this viewpoint, it becomes possible to much more improve the edge part peeling-preventing properties of the pressure-sensitive adhesive tape. Examples of the plasticizer which can be used include phthalic acid-based plasticizers (for example, dibutyl phthalate (DBP), diheptyl phthalate (DHP), dioctyl phthalate (DOP), diisononyl phthalate, diisodecyl phthalate (DIDP), ditridecyl phthalate (DTDP), ditriisodecyl phthalate, butyllauryl phthalate, and butylbenzyl phthalate) and trimellitic acid-based plasticizers (for example, trioctyl trimellitate (TOTM) and tri-n-octyl trimellitate). However, it should not be construed that the invention is limited thereto. Fatty acid-based plasticizers (for example, tributyl citrate, dioctyl adipate (DOA), dioctyl azelate (DOZ), dioctyl sebacate (DOS), and methylacetyl salicylate), phosphoric acid-based plasticizers (for example, tricresyl phosphate (TCP) and trioctyl phosphate (TOP)), epoxy-based plasticizers, polyester-based plasticizers, and the like can also be used. The plasticizer can be used singly or in combination of two or more kinds thereof. A blending amount of the plasticizer is not particularly limited. However, when the blending amount of the plasticizer is too high, the pressure-sensitive adhesive becomes soft, thereby causing adhesion failure or adhesive transfer. Accordingly, it is preferable that the blending amount of the plasticizer is not more than 30 parts by weight (for example, from 1 to 30 parts by weight) based on 100 parts by weight of the acrylic polymer (A). Incidentally, when the blending amount of the plasticizer is too low, the effect for softening the substrate by the plasticizer is lowered.

Furthermore, a crosslinking agent can also be used. The crosslinking agent is not particularly limited, and examples thereof include epoxy-based crosslinking agents, isocyanate-based crosslinking agents, and oxazoline-based crosslinking agents. The crosslinking agent can be used singly or in combination of two or more kinds thereof. A blending amount of the crosslinking agent is not particularly limited, and a usual amount of use which is applied to pressure-sensitive adhesive compositions is employable.

Moreover, so far as the effects of the invention are not hindered, the pressure-sensitive adhesive composition may contain, as the tackifying resin, other tackifying resin than the petroleum resin (B) or rosin-based resin (C) (for example, terpene-based tackifying resins, phenol-based tackifying resins, epoxy-based tackifying resins, polyamide-based tackifying resins, ketone-based tackifying resins, and elastomer-based tackifying resins).

As the need arises, the pressure-sensitive adhesive composition of the invention may contain various additives. As such additives, for example, known additives such as thickeners, ultraviolet ray absorbers, antioxidants, fillers, coloring agents, antistatic agents, expanding agents, and surfactants can be properly selected and used, in addition to the foregoing plasticizers (softening agents), tackifying resins and crosslinking agents.

The pressure-sensitive adhesive composition of the invention can be prepared by mixing the acrylic polymer (A), the petroleum resin (B), the rosin-based resin (C), and optionally a plasticizer and a crosslinking agent and besides, other additives. Incidentally, in the case where the pressure-sensitive adhesive composition is a pressure-sensitive adhesive composition of an emulsion type, if desired, by emulsifying the mixture at an appropriate stage using an emulsifier, it is possible to prepare a pressure-sensitive adhesive composition of an emulsion type. On this occasion, in the case where the acrylic polymer (A) is already in a form of an emulsion (aqueous dispersion), it is possible to prepare a pressure-sensitive adhesive composition of an emulsion type only by mixing the emulsion of the acrylic polymer (A), the petroleum resin (B), the rosin-based resin (C), and optionally various additives such as a plasticizer and a crosslinking agent.

Examples of the emulsifier include anionic emulsifiers such as sodium lauryl sulfate, ammonium lauryl sulfate, sodium dodecylbenzenesulfonate, polyoxyethylene alkyl ether sodium sulfates, polyoxyethylene alkylphenyl ether ammonium sulfates, polyoxyethylene alkylphenyl ether sodium sulfates, and polyoxyethylene alkyl sodium sulfocussinates; and nonionic emulsifiers such as polyoxyethylene alkyl ethers, polyoxyethylene alkylphenyl ethers, polyoxyethylene fatty acid esters, and polyoxyethylene polyoxypropylene block polymers). Furthermore, radical polymerizable emulsifiers in which a radical reactive group such as a propenyl group is introduced can also be used. The emulsifier can be used singly or in combination of two or more kinds thereof.

### [Pressure-sensitive adhesive tape]

The pressure-sensitive adhesive tape of the invention has a pressure-sensitive adhesive layer on at least one surface of the substrate, and the pressure-sensitive adhesive layer is formed of the foregoing pressure-sensitive adhesive composition. The pressure-sensitive adhesive tape may be in a form that the pressure-sensitive adhesive layer is formed on only one surface of the substrate or may be in a form that the pressure-sensitive adhesive layer is formed on the both surfaces of the substrate. Incidentally, in the case where the pressure-sensitive adhesive tape is in a form that the pressure-sensitive adhesive layer is formed on only one surface of the substrate, for example, when the pressure-sensitive adhesive tap is constituted of a substrate, a pressure-sensitive adhesive layer formed on one surface of the substrate and a back surface treatment layer formed on the other surface of the substrate, by superimposing the pressure-sensitive adhesive layer on the sheet back surface (surface of the back surface treatment layer) and winding in a roll shape, it is possible to prepare a pressure-sensitive adhesive tape in a state or form as wound in a roll shape. On this occasion, the pressure-sensitive adhesive layer is protected by the back surface treatment layer on the sheet back surface.

As a matter of course, in the case where the pressure-sensitive adhesive tape is a double-sided pressure-sensitive adhesive tape or the case where the sheet back surface of the substrate does not become a release treatment surface, by protecting the pressure-sensitive adhesive layer by a release liner (separator) and winding in a roll shape, it is possible to prepare a pressure-sensitive adhesive tape.

So far as the effects of the invention are not hindered, the pressure-sensitive adhesive tape may have other layers (for example, an interlayer and an undercoat layer) .

The pressure-sensitive adhesive layer may be in any form of a single layer or a laminate. A thickness (thickness after drying) of the pressure-sensitive adhesive layer is, for example, from approximately 10 to 50 µm (preferably from 15 to 40 µm).

The pressure-sensitive adhesive layer can be formed by a known and/or customary method. For example, it can be formed by utilizing a casting method, a roll coater method, a reverse coater method, a doctor blade method, etc.

### (Substrate)

The substrate in the pressure-sensitive adhesive tape of the invention is not particularly limited. For example, appropriate foliate bodies including paper-based substrates such as papers; fibrous substrates such as woven fabrics, non-woven fabrics, and nets; metal-based substrates such as metal foils and metal plates; plastic-based substrates such as plastic films or sheets; rubber-based substrates such as rubber sheets; foamed bodies such as foamed sheets; and laminates thereof (in particular, laminates of a plastic-based substrate and other substrate, laminates between plastic films (or sheets), and the like) can be used. As the substrate, plastic-based substrates such as plastic films or sheets can be preferably used. Examples of a raw material in such plastic films or sheets include polyester-based resins such as polyethylene terephthalate (PET), polyethylene naphthalate (PEN), and polybutylene terephthalate (PBT); polyvinyl chloride (PVC); vinyl acetate-based resins; polyphenylene sulfide (PPS); amide-based resins such as polyamides (nylons) and wholly aromatic polyamides (aramid); polyimide-based resins; and polyetheretherketone (PEEK) as well as polyolefin-based resins made of, as a monomer component, an α-olefin, such as polyethylene (PE), polypropylene (PP), an ethylene-propylene copolymer, and an ethylene-vinyl acetate (EVA) copolymer. Such a raw material can be used singly or in combination of two or more kinds thereof.

As the substrate, plastic-based substrates constituted of a polyolefin-based resin can be preferably used. Plastic-based substrates which are constituted of a plastic material containing a polyolefin-based resin and not substantially containing a halogen atom are especially preferable. The terms "not substantially containing a halogen atom" as referred to herein mean that a substance containing a halogen atom in the molecule thereof is not used as a constituent material (plastic material) of the substrate (plastic-based substrate). Accordingly, for example, what in the case of analyzing the composition of the substrate by an instrumental analysis measure, a halogen atom as detected in a trace amount level (for example, a trace amount of a halogen atom which is detected from the substrate as a result of incorporation of the halogen atom by a halogen atom-containing substance used as a catalyst at the time of synthesis of a compound (constituent material of the substrate) into the constituent material of the substrate) is contained is tolerable.

Examples of such a polyolefin-based resin include copolymers of ethylene and/or propylene and other α-olefin (especially random copolymers) such as an ethylenepropylene copolymer (especially a random copolymer) as well as polyethylene (for example, low density polyethylene, linear low density polyethylene, ultra low density polyethylene, medium density polyethylene, and high density polyethylene), polypropylene, polybutene, polybutylene, and polybutadiene. As the polyolefin-based resin, polyethylene and polypropylene are preferable, and polyethylene is especially preferable. The polyolefin-based resin can be used singly or in combination of two or more kinds thereof.

The polyolefin-based resin can be used together with other resin. As such a resin, thermoplastic resins having a carbonyl oxygen atom in the molecule (molecular skeleton) thereof can be preferably used from the viewpoint of imparting appropriate flexibility to the substrate. As such a thermoplastic resin having a carbonyl oxygen atom (oxygen atom assigned to the carbonyl group) in the molecule thereof, soft polyolefin-based resins having a carbonyl oxygen atom in the molecule thereof (sometimes referred to as "carbonyl group-containing polyolefin-based resin") can be preferably used. As a matter of course, since the subject carbonyl group-containing polyolefin-based resin is a polyolefin-based resin, it can be used as a polyolefin-based resin as the constituent material of the pressure-sensitive adhesive tape. That is, the carbonyl group-containing polyolefin-based resin may be used singly as a polyolefin-based resin or may be used together with other polyolefin-based resin.

Preferred examples of the carbonyl group-containing polyolefin-based resin include carbonyl group-containing ethylene-based copolymers obtained by using, as monomer components, ethylene, a vinyl ester-based compound and/or an (α, β -unsaturated carboxylic acid or a derivative thereof (for example, anhydrides, esters, and chlorides) or metal salts thereof (ionomers). Incidentally, a melting point of the carbonyl group-containing ethylene-based copolymers or its metal salt (ionomer) is generally not higher than 120°C, and preferably from 40 to 100°C. The subject melting point can be measured by a differential scanning calorimeter (DSC).

Examples of the vinyl ester-based compound include esters of vinyl alcohol and a lower carboxylic acid such as vinyl acetate (lower carboxylic acid vinyl esters). Furthermore, examples of the (α, β -unsaturated carboxylic acid include (meth)acrylic acid, maleic acid, fumaric acid, and itaconic acid. With respect to the α, β-unsaturated carboxylic acid derivative, examples of anhydrides of an α, β-unsaturated carboxylic acid include maleic anhydride and itaconic anhydride. Examples of α, β-unsaturated carboxylic acid esters include (meth)acrylic esters (for example, alkyl (meth)acrylates such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)-acrylate, pentyl (meth)acrylate, hexyl (meth)acrylate, heptyl (meth)acrylate, octyl (meth)acrylate, 2-ethylhexyl (meth) acrylate, isooctyl (meth) acrylate, nonyl (meth)-acrylate, isononyl (meth)acrylate, decyl (meth)acrylate, isodecyl (meth)acrylate, lauryl (meth)acrylate, and stearyl (meth) acrylate; cycloalkyl (meth)acrylates such as cyclohexyl (meth)acrylate; aryl (meth)acrylates; and functional group-containing (meth)acrylic esters such as glycidyl (meth)acrylate and 2-hydroxyethyl (meth)acrylate); maleic esters (for example, mono- or dialkyl maleates such as monomethyl maleate, monoethyl maleate, and diethyl maleate); and fumaric esters (for example, mono- or dialkyl fumarates such as monomethyl fumarate and monoethyl fumarate). As the vinyl ester-based compound and/or the **α**, **β**-unsaturated carboxylic acid or its derivative, vinyl acetate, (meth)acrylic acid, and (meth)acrylic esters are preferable; and as the (meth)acrylic ester, alkyl (meth)-acrylates (in particular, ethyl (meth) acrylate, and especially ethyl acrylate) are preferable. The vinyl ester-based compound and/or the α,β-unsaturated carboxylic acid or its derivative can be used singly or in combination of two or more kinds thereof.

Preferred specific examples of the carbonyl group-containing ethylene-based copolymer or its metal salt (ionomer) include an ethylene-acrylic acid copolymer, an ethylene-methacrylic acid copolymer, an ethylene-ethyl acrylate copolymer, an ethylene-acrylic acid-ethyl acrylate copolymer, an ethylene-vinyl acetate copolymer, an ethylene-vinyl acetate-ethyl acrylate copolymer, an ethylene-glycidyl methacrylate copolymer, an ethylene-glycidyl methacrylate-ethyl acrylate copolymer, and metal salts thereof (ionomers). The carbonyl group-containing ethylene-based copolymer or its metal salt (ionomer) can be used singly or in combination of two or more kinds thereof.

In addition, as the polyolefin-based resin, a polymer alloy containing an ethylene component and a propylene component can also be used. Incidentally, the constitution (form) of the subject polymer alloy is not particularly limited. Examples thereof include various constitutions (forms) such as (1) a polymer blend prepared by physically mixing two or more kinds of polymers (physical mixture), (2) a block copolymer or graft copolymer in which two or more kinds of polymers are bonded to each other through covalent binding, and (3) an IPN (interpenetrating polymer network) structure in which two or more kinds of polymers are get tangled together without being bonded to each other through covalent binding. Furthermore, the polymer alloy may be one in which the composition is not always uniform (the composition may have a distribution); one in which two or more kinds of polymers are compatibilized with each other (compatible polymer alloy); or one in which two or more kinds of polymers are incompatible with each other to form a phase separation structure (incompatible polymer alloy). Furthermore, the polymer alloy may be one exhibiting thermal characteristics such that plural exothermic or endothermic peaks exist in the measurement by a differential scanning calorimeter (DSC measurement).

Examples of the polymer alloy containing an ethylene component and a propylene component include a mixture of polypropylene (for example, homopolypropylene and random polypropylene) and polyethylene (including copolymers of ethylene and a small amount of other α-olefin) (physical mixture), a propylene/ethylene copolymer, and a terpolymer of propylene, ethylene and other α-olefin (examples of other α-olefin include 1-butene, 1-pentene, 1-hexene, 4-methyl-1-pentene, 1-heptene, and 1-octene, with 1-butene being preferable). Incidentally, the term "homopolypropylene" as referred to herein means a polymer in which the monomer component is substantially made of only propylene (100 %) (that is, a homopolymer of propylene). Furthermore, the terms "random polypropylene" as referred to herein mean a polypropylene-based random copolymer in which approximately several % of an ethylene component based on the whole of monomer components is randomly copolymerized with propylene.

In the case where the polymer alloy is a copolymer (in particular, a block copolymer), as the subject polymer alloy, copolymers resulting from copolymerization by multistage polymerization of two or more stages are preferable, and propylene/ethylene-based copolymers are especially preferable. Such a copolymer resulting from copolymerization by multistage polymerization can be, for example, prepared by first preliminarily polymerizing propylene or propylene and other α-olefin in the presence of a catalyst made of a titanium compound and an organoaluminum compound in the first stage of the multistage polymerization, thereby preparing polypropylene (homopolymer of propylene) or a propylene-α-olefin copolymer (copolymer of propylene and other α-olefin); and then copolymerizing propylene, ethylene and optionally other α-olefin in the presence of a resin composition obtained by the preliminary polymerization in the first stage, in the second stage, et seq., as described in JP-A-4-224809 and JP-A-2001-192629. In this way, there is obtained a polymer alloy in which the polymer formed by the preliminary polymerization in the first stage (polypropylene or propylene-α-olefin copolymer) and the polymer formed in the second stage, et seq. (propylene-ethylene copolymer or propylene-ethylene-other α-olefin copolymer) are blended in a molecular level in the polymerization step in the second stage, et seq.

Examples of the titanium compound include spherical solid catalysts having an average particle size of 15 µm resulting from copulverizing titanium trichloride and magnesium chloride and treating with n-butyl ortho-titanate, 2-ethylhexanol, ethyl p-toluate, silicon tetrachloride, diisobutyl phthalate, etc. Furthermore, examples of the organoaluminum compound which can be used include alkylaluminum-based compounds such triethylaluminum. In addition, in the polymerization layer, silicon-based compounds such as diphenyldimethoxysilane can be added as an electron donor, or iodine-based compounds such as ethyl iodide can also be used.

As such a polymer alloy containing an ethylene component and a propylene component, for examples, ones having a dynamic storage elastic modulus (E') at 23°C of 20 MPa or more and less than 400 MPa (preferably 200 MPa or more and less than 400 MPa), a dynamic storage elastic modulus (E') at 80°C of 40 MPa or more and less than 180 MPa (preferably 45 MPa or more and less than 160 MPa), and a dynamic storage elastic modulus (E') at 120°C of 12 MPa or more and less than 70 MPa (preferably from 15 to 65 MPa) are preferable. By having such a dynamic storage elastic modulus (E'), the substrate can exhibit satisfactory flexibility.

Incidentally, with respect to the dynamic storage elastic modulus (E') of the polymer alloy, values obtained by preparing a specimen made of a polymer alloy (thickness: 0.2 mm, width: 10 mm, length: 20 mm) and measuring a dynamic storage elastic modulus behavior of the subject specimen by the temperature dispersion using, as a measurement unit, a trade name "DMS200 (manufactured by Seiko Instruments Inc.)" under the following measurement conditions, that is, measurement method: tensile mode, temperature rise rate: 2°C/min, and frequency: 1 Hz, can be employed.

Specific examples of the polymer alloy having such a dynamic storage elastic modulus (E') include Catalloy (ADFLEX) Series products manufactured by SunAllomer Ltd. (for example, a trade name "KS-353P", a trade name "KS-021P", a trade name "C200F", and a trade name "Q200F").

In the invention, it is preferable that a flame resisting function (flame resistance) is supplemented to the plastic-based substrate. For example, by using a flame retarder to contain the flame retarder in the plastic-based substrate, it is possible to supplement a flame resisting function to the plastic-based substrate. As the flame retarder, flame retarders not containing a halogen atom are preferable, and inorganic flame retarders such as inorganic metal compounds can be especially preferably used. Specifically, examples of the inorganic flame retarder include metal hydroxides such as aluminum hydroxide, magnesium hydroxide, zirconium hydroxide, calcium hydroxide, and barium hydroxide; metal carbonates such as basic magnesium carbonate, calcium magnesium carbonate, calcium carbonate, barium carbonate, and dolomite; metal hydrates (hydrates of a metal compound) such as hydrotalcite and borax; and barium metaborate, magnesium oxide, and clay. As such an inorganic flame retarder, metal hydroxides such as aluminum hydroxide, magnesium hydroxide, zirconium hydroxide, calcium hydroxide, and barium hydroxide, basic magnesium hydroxide, hydrotalcite, and so on are preferable.

As the inorganic flame retarder (in particular, the inorganic metal compound), ones having been subjected to a surface treatment may also be employed. As such a surface treatment, a silane coupling treatment is enumerated. In the subject silane coupling treatment, known and/or customary silane coupling agents such as amino-based silane coupling agents can be used. Accordingly, as the flame retarder, inorganic metal compounds having been subjected to a surface treatment with a silane coupling agent can be preferably used.

Incidentally, the flame retarder can be used singly or in combination of two or more kinds thereof.

A proportion of the flame retarder is not particularly limited. For example, the proportion of the flame retarder is from approximately 10 to 200 parts by weight (preferably from 50 to 150 parts by weight) based on 100 parts by weight of the plastic-based substrate such as polyolefin-based resins. When the proportion of the flame retarder is less than 10 parts by weight based on 100 parts by weight of the polyolefin-based resin, the flame resistance of the substrate (or pressure-sensitive adhesive tape) is lowered, whereas when it exceeds 200 parts by weight, the flexibility or stretchability of the substrate (or pressure-sensitive adhesive tape) is lowered.

As the need arises, the plastic-based substrate may be blended with various additives such as fillers (for example, inorganic fillers such as titanium oxide and zinc oxide), anti-aging (for example, amine-based anti-aging agents, quinoline-based anti-aging agents, hydroquinone-based anti-aging agents, phenol-based anti-aging agents, phosphorus-based anti-aging agents, and phosphorous ester-based anti-aging agents), antioxidants, ultraviolet ray absorbers (for example, salicylic acid derivatives, benzophenone-based ultraviolet ray absorbers, benzotriazole-based ultraviolet ray absorbers, and hindered amine-based ultraviolet ray absorbers), lubricants, plasticizers, coloring agents (for example, pigments and dyes), nucleating agents, and heavy metal deactivators.

A production method of the plastic-based substrate as a substrate (for example, a film forming method of a polyolefin-based resin) is not particularly limited. For example, in the case where the plastic-based substrate is formed of a polyolefin-based resin composition, the plastic-based substrate is obtained by drying blending a polyolefin-based resin and optionally an inorganic flame retarder and various additives such as fillers, kneading the subject mixture using a Banbury mixer, a roll, an extruder, etc. (on this occasion, heating can be performed, if desired), and molding the subject kneaded product into a film-like or sheet-like form by a known and/or customary molding method (for example, a compression molding method, a calender molding method, an injection molding method, and an extrusion molding method). As the production method of the substrate, a calender rolling method and an extrusion method by a flat die (flat die extrusion method) can be preferably employed.

The plastic-based substrate has a film-like or sheet-like form. A thickness of the substrate (plastic film or sheet) is not particularly limited. Thought the thickness of the substrate varies depending upon the application of the pressure-sensitive adhesive tape, it is generally from approximately 0.01 to 1 mm (preferably from 0.05 to 5 mm). Incidentally, the substrate may be in a single layer form or may be in a multilayered form. As the need arises, the substrate may be subjected to a treatment of every kind such as a back surface treatment, an antistatic treatment, and an undercoating treatment.

As described previously, the pressure-sensitive adhesive tape of the invention is excellent in edge part peeling-preventing properties and is able to reveal an appropriate unwinding force. Accordingly, the pressure-sensitive adhesive tape of the invention can be unwound with an appropriate unwinding force during the use, and after sticking, it exhibits excellent edge part peeling-preventing properties, thereby enabling the state that the pressure-sensitive adhesive tape is stuck with satisfactory adhesion to keep over a long period of time.

Furthermore, by using, as the substrate, a plastic-based substrate which does not substantially contain a halogen atom, when used as the pressure-sensitive adhesive tape, the production of noxious fumes in destruction by fire can be prevented. Moreover, by using, as the substrate, a plastic-based substrate to which a flame resisting function is supplemented, the heat resistance of the pressure-sensitive adhesive tape can be improved. Accordingly, it is possible to provide the pressure-sensitive adhesive tape of the invention as a pressure-sensitive adhesive tap which is excellent in heat resistance and which does not produce noxious fumes at the time of destruction by fire.

In consequence, the pressure-sensitive adhesive tape of the invention can be preferably used as a pressure-sensitive adhesive tape for bundling and can be especially preferably used as a pressure-sensitive adhesive tape for bundling which is used in places where electric insulation is required (in particular, a pressure-sensitive adhesive tape for bundling wirings). The wirings may be any of wirings such as various electric wires and cables. Above all, electric wires for electric appliances and electric wires for automobiles (in particular, electric wires for automobiles) can be preferably used.

According to the pressure-sensitive adhesive composition of the invention, it is possible to obtain a pressure-sensitive adhesive tape having excellent edge part peeling-preventing properties and capable of revealing an appropriate unwinding force. In addition, it is possible to provide a pressure-sensitive adhesive tape in which the production of noxious fumes at the time of destruction by fire is prevented. Accordingly, the pressure-sensitive adhesive tape of the invention is useful as a pressure-sensitive adhesive tape for bundling.

The invention will be hereunder described in more detail with reference to the following Examples, but it should not be construed that the invention is limited to these Examples.

### EXAMPLE 1

As shown in Table 1, 100 parts by weight (solids content) of an emulsion of an acrylic polymer (an emulsion of an acrylic polymer obtained by blending 100 parts by weight of a mixture consisting of 95 % by weight of 2-ethylhexyl acrylate and 5 % by weight of methacrylic acid with 0.03 part by weight of a water-soluble azo-based initiator as a polymerization initiator, emulsifying the blend with 2 parts by weight ammonium laurylsulfate (a trade name "KAO EMAL AD-25R", manufactured by Kao Corporation), and polymerizing the emulsion at about 60°C for 2 hours) was blended with 25 parts by weight of a trade name "AP-1085" (manufactured by Arakawa Chemical Industries, Ltd.) as a petroleum resin, 5 parts by weight of a trade name "E-865" (a rosin ester-based resin manufactured by Arakawa Chemical Industries, Ltd.) as a rosin-based resin, and 0.01 part by weight of a trade name "TETRAD C" (an epoxy-based crosslinking agent manufactured by Mitsubishi Gas Chemical Company, Inc.) as a crosslinking agent and mixed at the ordinary temperature (from 20 to 25°C) for about 10 minutes by a homomixer at a revolution rate of about 1,000 to 2,000 rpm, thereby obtaining a pressure-sensitive adhesive composition of an emulsion type (pressure-sensitive adhesive composition of an aqueous dispersion). This pressure-sensitive adhesive composition was coated on one surface of the following polyolefin-based resin-made substrate in a thickness after drying of 30 µm and then dried for hardening to form a pressure-sensitive adhesive layer. Thereafter, the product was wound such that the pressure-sensitive adhesive layer was overlaid on the back surface (own back surface) of the polyolefin-based resin-made substrate, thereby preparing a pressure-sensitive adhesive tape.

### Polyolefin-based resin-made substrate:

- Ethylene-vinyl acetate (EVA) copolymer (melting point: 84°C, a trade name: EVAFLEX P-1905, manufactured by Du Pont-Mitsui Polychemicals Co., Ltd.): 20 parts by weight
- Polymer alloy containing an ethylene component and a propylene component (a trade name: CATALLOY KS-353P, manufactured by Montell SDK Sunrise Ltd.): 80 parts by weight
- Magnesium hydroxide (Mg(OH)₂) (having been subjected to a silane-based coupling agent; a trade name: KISUMA 5NH, manufactured by Kyowa Chemical Industry Co., Ltd.): 170 parts by weight
- Carbon black (a trade name: SEAST 3H, manufactured by Tokai Carbon Co., Ltd.): 4 parts by weight

The foregoing respective materials (ethylene-vinyl acetate copolymer, polymer alloy, magnesium hydroxide and carbon black) were dry blended and then kneaded at 180°C by a 3L pressure kneader, followed by pelletization. The pelletized composition was molded into a film having a thickness of 0.2 mm by a calender rolling machine, thereby preparing a tape substrate. One surface of the subject tape substrate was subjected to a corona discharge treatment, thereby obtaining the titled polyolefin-based resin-made substrate.

### EXAMPLES 2 TO 5

Pressure-sensitive adhesive compositions of an emulsion type were obtained in the same manner as in Example 1, except for using the emulsion of an acrylic polymer, the petroleum resin, the rosin-based resin and the crosslinking agent in proportions as shown in Table 1. Each of these pressure-sensitive adhesive compositions was coated on one surface of a polyolefin-based resin-made substrate the same as in Example 1 in a thickness after drying of 30 µm and dried for hardening to form a pressure-sensitive adhesive layer, and the product was then wound such that the pressure-sensitive adhesive layer was overlaid on the back surface (own back surface) of the polyolefin-based resin-made substrate. There were thus prepared pressure-sensitive adhesive tapes.

### COMPARATIVE EXAMPLES 1 TO 4

Pressure-sensitive adhesive compositions of an emulsion type were obtained in the same manner as in Example 1, except for using the emulsion of an acrylic polymer, the petroleum resin or rosin-based resin and the crosslinking agent in proportions as shown in Table 1. Each of these pressure-sensitive adhesive compositions was coated on one surface of a polyolefin-based resin-made substrate the same as in Example 1 in a thickness after drying of 30 µm and dried for hardening to form a pressure-sensitive adhesive layer, and the product was then wound such that the pressure-sensitive adhesive layer was overlaid on the back surface (own back surface) of the polyolefin-based resin-made substrate. There were thus prepared pressure-sensitive adhesive tapes.

### (Evaluation)

The pressure-sensitive adhesive tapes as obtained in Examples 1 to 5 and Comparative Examples 1 to 4 were each evaluated with respect to the adhesive strength, the edge part peeling-preventing properties and the unwinding force according to the following measurement methods or evaluation method.

### (Measurement method of adhesive strength)

Each of the pressure-sensitive adhesive tapes according to Examples 1 to 5 and Comparative Examples 1 to 4 was cut into a size of 19 mm in width and 100 mm in length; this pressure-sensitive adhesive tape of 19 mm x 100 mm was press bonded onto the following adherend by reciprocating once a roll of 2 kg; and after allowing it to stand under the following standing condition, a force necessary for peeling (180° peeling strength) (N/19 mm) was measured by a 180° peeling test (peeling angle: 180°, drawing rate: 300 mm/min, measured at 23°C and 50 % RH), thereby evaluating the adhesive strength. The measurement results on the respective adherends are shown in the sections of "Adhesive strength against SUS plate (N/19 mm)" and "Adhesive strength on own back surface (N/19 mm)" in Table 1.

Adherend: Stainless steel plate (SUS plate) or own back surface (surface of polyolefin-based resin-made substrate)

Standing condition: 23°C x 20 minutes

### (Evaluation method of edge part peeling-preventing properties)

A pressure-sensitive adhesive tape which had been cut in a width of 6.4 mm was wound around a 3.2-mmφ metal rod according to the "edge part peeling test of ASTM", and a distance (mm) of edge part peeling after one week (seven days) was measured. The evaluation results are shown in the section of "Edge part peeling-preventing properties (mm)" in Table 1. Incidentally, the shorter the distance of edge part peeling, the more excellent the edge part peeling-preventing properties are.

### (Measurement method of unwinding force)

A pressure-sensitive adhesive tape which had been cut in a width of 19 mm was unwound under the conduction at room temperature (23°C) and at a drawing rate of 30 mm/min using a pressure-sensitive adhesive tape unwinding tester (unit name: Unwinding Tester, manufactured by Imada Seisakusho Co., Ltd.). On this occasion, a tensile force (unwinding force) (N/19 mm) was measured. The measurement results are shown in the section of "Unwinding force (N/19 mm)" in Table 1.

**Table 1**

| | Example | | | | | Comparative Example | | | |
|---|---|---|---|---|---|---|---|---|---|
| | 1 | 2 | 3 | 4 | 5 | 1 | 2 | 3 | 4 |
| Composition: | | | | | | | | | |
| Emulsion of acrylic polymer (parts by weight) | 100 | 100 | 100 | 100 | 100 | 100 | 100 | 100 | 100 |
| resin Petroleum resin 25 (parts by weight) | | 20 | 5 | 10 | 10 | 30 | 50 | 0 | 0 |
| Rosin-based resin (parts by weight)) | 5 | 10 | 35 | 30 | 40 | 0 | 0 | 30 | 50 |
| Crosslinking agent (parts by weight) | 0.01 | 0.01 | 0.01 | 0.01 | 0.01 | 0.01 | 0.01 | 0.01 | 0.01 |
| Evaluation results: | | | | | | | | | |
| Adhesive strength against SUS plate (N/19 mm) | 2.3 | 2.6 | 3.0 | 3.0 | 4.7 | 2.6 | 2.3 | 2.8 | 3.4 |
| Adhesive strength of own back surface (N/19 mm) | 3.5 | 3.4 | 2.4 | 2.3 | 3.3 | 3.7 | 3.2 | 2.1 | 1.8 |
| Unwinding force (N/19 mm) | 10.1 | 8.0 | 3.8 | 5.8 | 5.0 | 8.6 | 13 | 3.0 | 1.5 |
| Edge part peeling-preventing properties (mm) | 1.5 | 1.0 | 0 | 0.5 | 0 | 12 | 8.0 | 1.0 | |

As is clear from Table 1, all the pressure-sensitive adhesive tapes according to Examples 1 to 5 are satisfactory with respect to the edge part peeling-preventing properties. Furthermore, generally speaking, it was confirmed that when the proportion of the petroleum resin is high, the unwinding force is large, whereas when the proportion of the rosin-based resin is high, the edge part peeling-preventing properties is satisfactory.

Incidentally, in comparison of the pressure-sensitive adhesive tapes according to Comparative Examples 1 to 2 with the pressure-sensitive adhesive tapes according to the Examples, it is understood that when the rosin-based resin is added, the edge part peeling-preventing properties are improved. On the other hand, in comparison of the pressure-sensitive adhesive tapes according to Comparative Examples 3 to 4 with the pressure-sensitive adhesive tapes according to the Examples, it is understood that when the petroleum resin is added, the unwinding force is improved.

Accordingly, it was confirmed that the pressure-sensitive adhesive tapes according to the Examples are well balanced between the edge part peeling-preventing properties and the unwinding force and are satisfactory with respect to the adhesiveness as compared with the pressure-sensitive adhesive tapes according to the Comparative Examples.

Furthermore, since the substrate in the pressure-sensitive adhesive tapes according to the Examples is constituted of an olefin-based resin, it does not contain a halogen atom and does not produce noxious fumes at the time of destruction by fire or the like. Moreover, the substrate contains an inorganic flame retarder and is satisfactory with respect to the heat, resistance. Accordingly, the pressure-sensitive adhesive tapes according to the Examples can be preferably used as a pressure-sensitive adhesive tape for bundling wirings and is especially useful as a pressure-sensitive adhesive tape for bundling electric cables for automobiles for which heat resistance is required.

While the invention has been described in detail and with reference to specific embodiments thereof, it will be apparent to one skilled in the art that various changes and modifications can be made therein without departing from the spirit and scope thereof.

## Claims

1. A pressure-sensitive adhesive composition containing at least (A) an acrylic polymer, (B) a petroleum resin, and (C) a rosin-based resin, wherein the component (B) and the component (C) are contained in proportions of from 1 to 50 parts by weight and from 1 to 50 parts by weight, respectively based on 100 parts by weight of the component (A).

2. The pressure-sensitive adhesive composition according to claim 1, wherein the total sum of the component (B) and the component (C) is not more than 60 parts by weight based on 100 parts by weight of the component (A).

3. The pressure-sensitive adhesive composition according to claim 1 or 2, wherein the rosin-based resin (C) is a rosin ester-based resin.

4. The pressure-sensitive adhesive composition according to any one of claims 1 to 3, wherein the rosin-based resin (C) has a softening point of from 80 to 180°C.

5. A pressure-sensitive adhesive tape comprising a substrate having on at least one surface thereof a pressure-sensitive adhesive layer, wherein the pressure-sensitive adhesive layer is formed of the pressure-sensitive adhesive composition according to any one of claims 1 to 4.

6. The pressure-sensitive adhesive tape according to claim 5, wherein the substrate contains a polyolefin-based resin and does not substantially contain a halogen atom.

7. The pressure-sensitive adhesive tape according to claim 5 or 6, which is a pressure-sensitive adhesive tape for bundling.
